# EUROPÄISCHE PATENTSCHRIFT

(11) **EP 0 843 147 B1**
(45) Veröffentlichungstag und Bekanntmachung des Hinweises auf die Patenterteilung: **27.02.2002**
(21) Anmeldenummer: 97250331.2
(22) Anmeldetag: 07.11.1997
(51) Int. Cl.: F41F 3/052, B64D 1/04

(54) **Verriegelungs-Baugruppe bei einem Startgerät für Flugkörper**
Locking assembly for rocket launcher
Ensemble de verrouillage pour un lanceur de missiles

(30) Priorität: 14.11.1996 DE 19648609
(43) Veröffentlichungstag der Anmeldung: 20.05.1998
(73) Patentinhaber: Bodenseewerk Gerätetechnik GmbH, 88662 Überlingen (DE)
(72) Erfinder: Giesenberg, Peter, 88682 Salem (DE); Stadler, Rolf, 88662 Überlingen (DE)
(74) Vertreter: Weisse, Jürgen, Dipl.-Phys.

(56) Entgegenhaltungen:
- DE-A- 3 301 567
- US-A- 3 166 981

## Beschreibung

### Technisches Gebiet

Die Erfindung betrifft eine Verriegelungs-Baugruppe bei einem Startgerät für Flugkörper, enthaltend eine schwenkbar gelagerte Sperrklinke, die mit zwei Sperrnasen zum Übergreifen eines an dem Flugkörper vorgesehenen Schuhs versehen ist, eine Feder, durch welche die Sperrklinke in Richtung auf eine Sperrstellung vorbelastet ist, in welcher der Schuh des Flugkörpers durch die Sperrnasen gehalten ist, und eine an der Sperrklinke angeordnete Riegelnase, einen Sicherheitshebel mit einer Anlagefläche, an welcher sich die Riegelnase in der Sperrstellung anlegt, wenn Beschleunigungskräfte auf die Sperrklinke wirken, so daß die Sperrklinke in der Sperrstellung gehalten wird, in welcher der Schuh des Flugkörpers von den Sperrnasen übergriffen wird, und an dem Sicherheitshebel angreifende Stellmotormittel zum Herausschwenken des Sicherheitshebels um eine strukturfeste Schwenkachse aus der Schwenkbahn der Riegelnase, so daß die Sperrklinke gegen die Wirkung der Feder in eine Freigabestellung verschwenkbar ist, in der sie den Schuh des Flugkörpers freigibt.

### Stand der Technik

Flugkörper, insbesondere zielverfolgende Raketen, sind in Startgeräten gehaltert, die an einem Flugzeug angebracht sind. In diesen Startgeräten sind sie durch Sperrklinken gegen unbeabsichtigtes Herausrutschen gesichert. Diese Sperrklinken greifen über einen Schuh, der an dem Flugkörper vorgesehen ist. Der Schuh wird durch eine Feder, z.B. ein Blattfederpaket, in seiner Sperrstellung gehalten. Außerdem stützt sich die Sperrklinke mit einer Riegelnase an einem Sicherheitshebel ab. Beim Abschuß des Flugkörpers wird der Sicherheitshebel durch eine elektro-mechanische Einrichtung aus der Bahn der Riegelnase entfernt. Dann wird die Sperrklinke nur noch durch die Feder in ihrer Sperrstellung gehalten. Der Schub des Triebwerks des Flugkörpers überwindet die Feder und drückt die Sperrklinke zur Seite, so daß der Flugkörper freigegeben wird und aus dem Startgerät austreten kann.

Die GB-A-2 133 865 zeigt eine solche Anordnung, bei welcher der Sperrhebel ein Kniehebel mit einem Gelenk ist. Das Gelenk liegt an einem Anschlag an, der ein Durchknicken des Kniehebels verhindert. Zur Freigabe der Sperrklinke wird der Anschlag durch eine elektro-mechanische Vorrichtung weggezogen. Dann knickt der Kniehebel durch und bietet keinen Widerstand für die Riegelnase mehr. Bei dieser bekannten Anordnung dient der Kniehebel dazu, die Freigabe des Flugkörpers gegenüber dem Zeitpunkt der Zündung des Triebwerkes um eine definierte, von den Umgebungs-Bedingungen abhängige Zeit zu verzögern.

Bei üblichen Verriegelungs-Baugruppen der vorliegenden Art ist ein Sicherheitshebel, an welchem die Riegelnase zur Anlage kommt, einfach um eine Schwenkachse verschwenkbar, Der Sicherheitshebel ist zur Freigabe des Sperriegels durch eine elektro-mechanische Schwenkeinrichtung aus der Bahn der Riegelnase herausschwenkbar.

Ein Beispiel einer solchen Verriegelungs-Baugruppe ist dargestellt in der WO-A-94/03364 und in der US-A-5 533 433.

Dort liegt ein starrer, um eine Schwenkachse schwenkbar gelagerter Sicherheitshebel in seiner normalen Betriebsstellung mit seiner Stirnseite als Anschlagfläche vor der Riegelnase. Dort hat der Sicherheitshebel den Zweck, ein Herausrutschen des Flugkörpers aus dem Startgerät bei starken Trägheitskräften zu verhindern.

Es hat sich in der Praxis gezeigt, daß dieser Mechanismus gelegentlich versagt.

### Offenbarung der Erfindung

Der Erfindung liegt die Aufgabe zugrunde, bei einer Verriegelungs-Baugruppe der eingangs genannten Art die Zuverlässigkeit der Freigabe der Riegelnase durch den schwenkbaren Sicherheitshebel zu verbessern.

Erfindungsgemäß wird diese Aufgabe dadurch gelöst, daß der Sicherheitshebel Mittel zur Verringerung des Abstandes zwischen Anlagefläche und Schwenkachse im Verlauf der Schwenkbewegung aufweist, so daß die Anlagefläche sich bei der Schwenkbewegung von der Riegelnase entfernt.

Der Erfindung beruht auf einer Untersuchung der Ursachen der Fehlfunktion. Es hat sich gezeigt, daß die Fehlfunktion darauf beruht, daß unter dem Einfluß von Trägheitskräften, welche von dem Flugkörper auf die Sperrklinke ausgeübt werden, zwischen der Riegelnase und der Anlagefläche des Sicherheitshebels manchmal so starke Reibungskräft auftreten, daß die elekro-mechanische Auslöse-Einrichtung nicht in der Lage ist, den Sicherheitshebel zu verschwenken. Wie sich weiter gezeigt hat, können diese Probleme dadurch gelöst werden, daß die Anlagefläche des Sicherheitshebels bei Einleitung der Schwenkbewegung etwas zurückgezogen wird, so daß sie sich von der Riegelnase löst. Dann kann der Sicherheitshebel ohne Schwierigkeit aus der Bahn der Riegelnase herausgeschwenkt werden.

Diese Lösung gestattet es, den Grundaufbau der Verriegelungs-Baugruppe mit schwenkbarem Sicherheitshebel, wie sie in großem Umfang im Einsatz ist, beizubehalten. Eine Umrüstung ist daher mit geringem Aufwand und innerhalb des zur Verfügung stehenden Raumes möglich.

Die Erfindung kann in der Weise verwirklicht werden, daß der Sicherheitshebel von einem ersten, der Riegelnase benachbarten und die Anlagefläche bildenden Lenker und einem zweiten, der Riegelnase abgewandten, um die Schwenkachse schwenkbar gelagerten Lenker gebildet ist, die durch ein Gelenk verbunden sind, der Sicherheitshebel in einer Betriebsstellung an einem strukturfesten Anschlag anliegt, der ein Durchknicken des zweiteiligen Sicherheitshebels unter dem Einfluß von Längskräften in einer ersten Richtung verhindert, so daß der Sicherheitshebel wie eine starre Struktur wirkt, die Knickbewegung der Lenker gegeneinander in einer zweiten Richtung durch Anschlagmittel auf einen endlichen Winkel begrenzt ist und die Mittel zum Herausschwenken des Sicherheitshebels an dem zweiten Lenker angreifen.

Auf diese Weise knickt der Sicherheitshebel vor der Verschwenkung etwas ein, nämlich bis zu den Anschlagmitteln. Dadurch verkürzt sich die effektive Hebellänge. Die Anlagefläche des Sicherheitshebels wird von der Riegelnase abgehoben. Erst dann erfolgt die Verschwenkung des Sicherheitshebels, ohne durch Reibungskräfte behindert zu werden.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt eine Verriegelungs-Baugruppe in ihrer Betriebsstellung, in welcher die Sperrklinke den Flugkörper verriegelt und durch den Sicherheitshebel in dieser Stellung gesichert ist.
- Fig.2: zeigt die Verriegelungs-Baugruppe von Fig.1 in einer Zwischenstellung, in welcher der Sicherheitshebel zu Beginn der Schwenkbewegung bis zu den Anschlagmitteln eingeknickt ist, so daß die Anlagefläche von der Riegelnase abgehoben wird.
- Fig.3: zeigt die Verriegelungs-Baugruppe von Fig.1 und 2 in einer Endstellung, in welcher der Sicherheitshebel aus der Bahn der Riegelnase herausgeschwenkt ist.

### Bevorzugte Ausführung der Erfindung

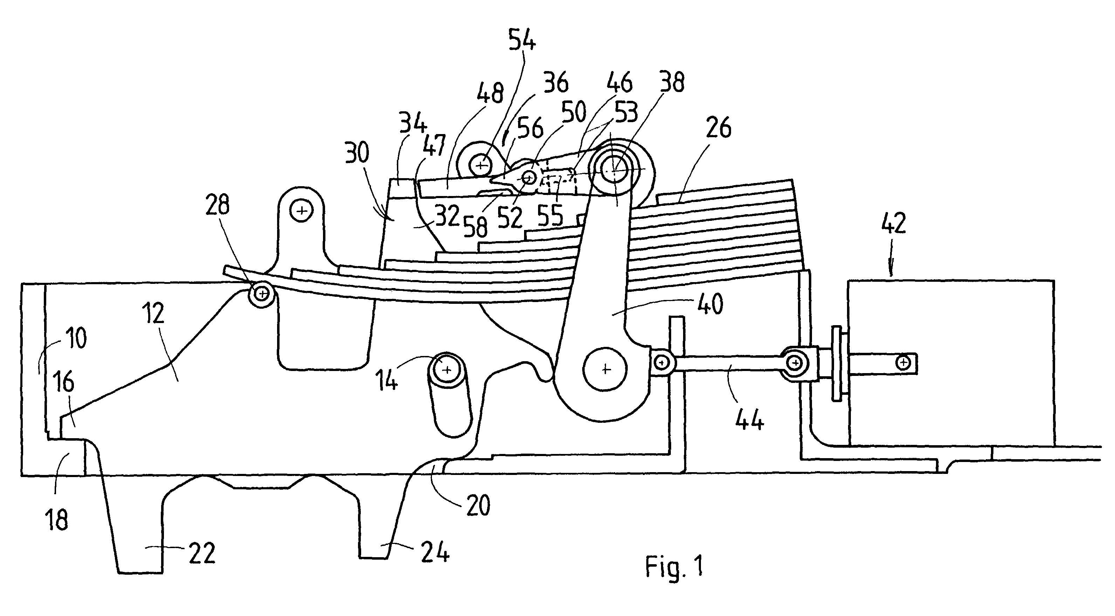

In Fig.1 ist mit 10 das Gehäuse einer Verriegelungs-Baugruppe bezeichnet. In dem Gehäuse sitzt eine Sperrklinke 12. Die Sperrklinke 12 ist um einen im Gehäuse 10 sitzenden Zapfen 14 schwenkbar gelagert. Der Zapfen 14 erstreckt sich durch ein in der Sperrklinke 12 vorgesehenes Langloch. Die Sperrklinke 12 liegt mit einer Nase 16 auf einem an dem Gehäuse 10 gebildeten Rand 18 auf. Der Rand begrenzt einen Durchbruch 20 im Boden des Gehäuses 10. Durch diesen Durchbruch ragen zwei Sperrnasen 22 und 24. Die beiden Sperrnasen 22 und 24 greifen im Betrieb über einen an dem Flugkörper angebrachten Schuh und sichern den Flugkörper gegen Herausrutschen aus dem Startgerät. Eine Feder 26 in Form eines Blattfederpakets drückt auf einen Stift 28 an der Sperrklinke 12.

Die Sperrklinke 12 ist auf dem Zapfen 14 und dem Rand 18 auf. Der Stift 28 ist am oberen Teil der Sperrklinke 12 zwischen Zapfen 14 und Rand 18 angeordnet. Die Feder 26 drückt daher die Sperrklinke in die in Fig.1 dargestellte Sperrstellung, in welche die Sperrnasen über den Schuh des Flugkörpers greifen.

An der Sperrklinke 12 ist weiterhin eine Riegelnase 30 angeformt. Die Riegelnase 30 ist T-förmig mit einem Mittelteil 32 und einem Querstück 34. Vor dem Querstück 34 erstreckt sich ein Sicherheitshebel 36. Der Sicherheitshebel 36 ist um eine Schwenkachse 38 schwenkbar gelagert. Mit dem Sicherheitshebel 36 ist ein Schwenkhebel 40 starr verbunden. An dem Schwenkhebel 40 greift ein elektro-mechanischer Stellmotor 42 über einen Lenker 44 an. Der Sicherheitshebel 36 bildet eine Anlagefläche 47, an welcher die Riegelnase 30 mit dem Querstück 34 zur Anlage kommt, wenn Trägheitskräfte des Flugkörpers über die Sperrnase 22 die Sperrklinke 12 unter Überwindung der Feder 26 im Uhrzeigersinn zu verschwenken trachten.

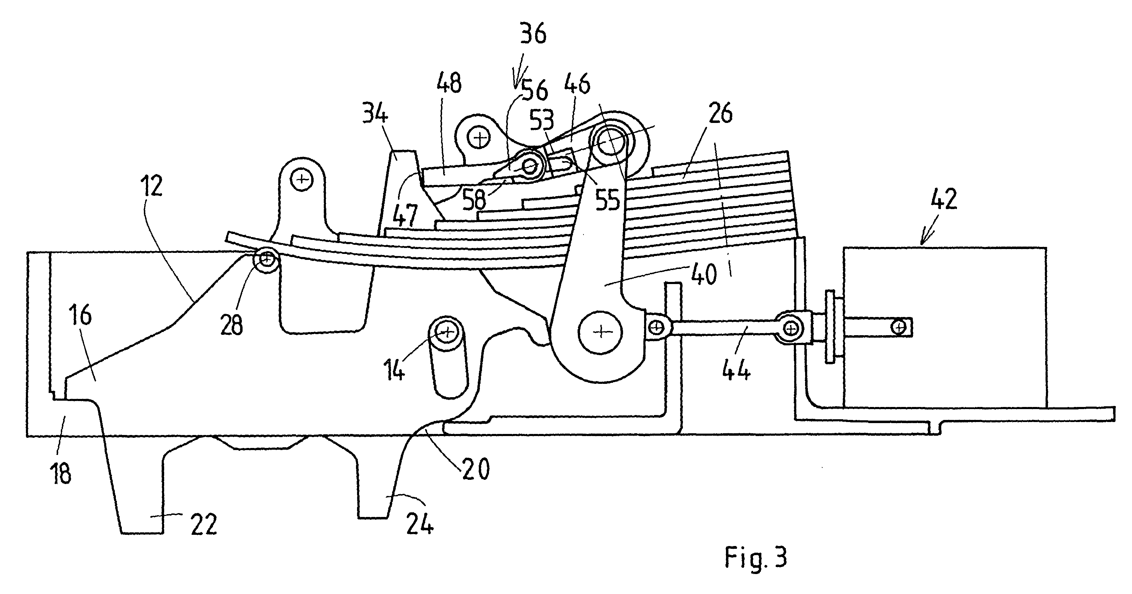

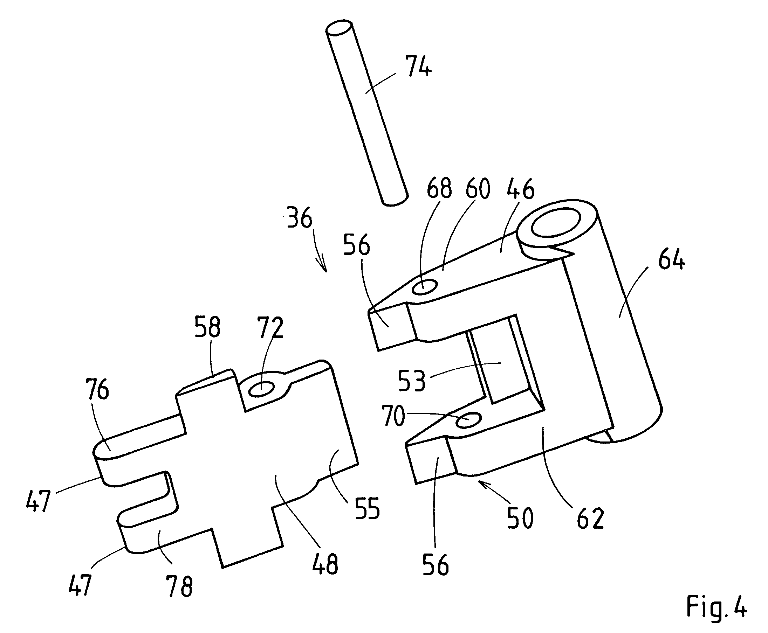

Durch den Stellmotor 42 ist der Schwenkhebel 40 und damit der Sicherheitshebel 36 entgegen dem Uhrzeigersinn in Fig. 1 verschwenkbar. Dadurch kann der Sicherheitshebel 36, wie in Fig.3 dargestellt, im Uhrzeigersinn aus der Bahn der Riegelnase 30 herausbewegt werden. Dann ist die Blockierung der Sperrklinke aufgehoben. Wenn dann das Triebwerk des Flugkörpers gezündet wird, drückt der auf die Sperrnase 22 wirkende Schub des Triebwerkes die Sperrklinke 12 weg. Die Sperrklinke 12 schwenkt gegen die Wirkung der von dem Schub überwundenen Feder 26 im Uhrzeigersinn um den Zapfen 14. Der Flugkörper wird dadurch freigegeben.

Durch die von dem Flugkörper auf die Sperrnase 22 ausgeübten Trägheitskräfte können sehr große Kräfte an der Anlagefläche 47 zwischen der Riegelnase 30 und dem 36 Sicherheitshebel auftreten. Diese Kräfte haben entsprechend große Reibungskräfte zur Folge. Diese Reibungskräfte können u.U. von dem elektro-mechanischen Stellmotor 42 nicht überwunden werden. Die Sperrklinke 12 und damit der Flugkörper bleiben dann blockiert. Das kann zu gefährlichen Situationen führen.

Diese Gefahr wird durch die dargestellte Konstruktion des Sicherheitshebels 36 vermieden.

Der Sicherheitshebel 36 besteht aus zwei Lenkern 46 und 48. Der Lenker 46, der von der Riegelnase 30 entfernt liegt, ist drehbar um die Schwenkachse 38 gelagert und mit dem Schwenkhebel 40 starr verbunden. An dem Lenker 46 ist der der Riegelnase 30 benachbarte Lenker 48 mittels eines Gelenks 50 um eine Achse 52 schwenkbar gelagert. Der Lenker 46 bildet riegelnasenseitig die Anlagefläche 47. In der in Fig.1 dargestellten Stellung sind die beiden Lenker 46 und 48 im wesentlichen fluchtend angeordnet. Ein Durchknicken des von den beiden Lenkern 46 und 48 gebildeten Systems nach oben unter dem Einfluß der in Längsrichtung von der Riegelnase 30 ausgeübten Kraft wird durch einen strukturfesten Anschlag 54 verhindert.

In dieser Stellung liegt die Riegelnase 30 u.U. mit großer Kraft an der Anschlagfläche 47 an.

Zur Freigabe des Flugkörpers wird der Schwenkhebel 40 von dem Servomotor 42 nach rechts in Fig.1 gezogen und der Schwenkhebel 40 entgegen dem Uhrzeigersinn verschwenkt.

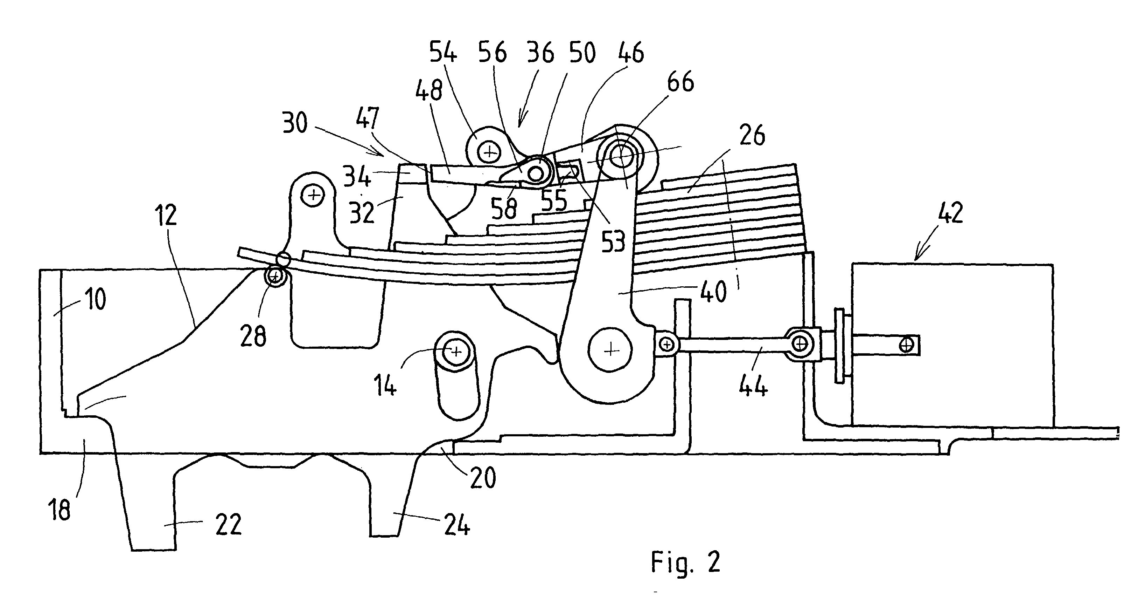

Wie aus Fig.2 ersichtlich ist, knickt dabei der Sicherheitshebel 36 mit den beiden Lenkern 46 und 48 nach unten in Fig.1 und 2 durch. Der Lenker 46 wird entgegen dem Uhrzeigersinn verschwenkt, und damit erfolgt eine Verschwenkung des Lenkers 48 im Uhrzeigersinn. Bei einem Schwenkwinkel von 6° kommt dann eine Anschlagnase an dem Lenker 46 oder dem mit dem Lenker 46 verbundenen Teil des Gelenks 50 an einem Gegenanschlag 58 des Lenkers 48 zur Anlage.

Bei dieser Knickbewegung wird die effektive Länge des Sicherheitshebels 36 verringert. Die Anlagefläche 47 wird von der Riegelnase 30 abgehoben oder wegbewegt. Dadurch fällt die Reibungskraft weg. Bei einer weiteren Schwenkbewegung bis zu einem Schwenkwinkel von 12°, wie sie in Fig.3 dargestellt ist, wird der Lenker 48 von dem Lenker 46 über das Gelenk 50 und die Anschlagnase 56 mitgenommen. Die Anlagefläche 46 wird relativ zu dem Querstück 34 der Riegelnase 30 nach unten in Fig.3 bewegt und die Riegelnase 30 dadurch freigegeben. Das geschieht praktisch reibungsfrei. Eine Blockierung des Sicherheitshebels 36 durch Reibungskräfte wird dadurch ausgeschlossen.

Statt der dargestellten und beschriebenen Lenkeranordnung könnten zur Erzielung des gleichen Effektes auch andere Mechanismen, beispielsweise mit einem Exzenter, verwendet werden, um eine Rückzugs-Bewegung der Anlagefläche 47 zu erreichen.

## Patentansprüche

1. Verriegelungs-Baugruppe bei einem Startgerät für Flugkörper, enthaltend
(a) eine schwenkbar gelagerte Sperrklinke (12), die mit zwei Sperrnasen (22,24) zum Übergreifen eines an dem Flugkörper vorgesehenen Schuhs versehen ist,
(b) eine Feder (26), durch welche die Sperrklinke (12) in Richtung auf eine Sperrstellung vorbelastet ist, in welcher der Schuh des Flugkörpers durch die Sperrnasen (22,24) gehalten ist, und
(c) eine an der Sperrklinke (12) angeordnete Riegelnase (30),
(d) einen Sicherheitshebel (36) mit einer Anlagefläche (47), an welcher sich die Riegelnase (30) in der Sperrstellung anlegt, wenn Trägheitskräfte des Flugkörpers auf die Sperrklinke (12) wirken, so daß die Sperrklinke (12) in der Sperrstellung gehalten wird, in welcher der Schuh des Flugkörpers von den Sperrnasen (22,24) übergriffen wird, und
(e) an dem Sicherheitshebel angreifende Stellmotormittel (42,44,40) zum Herausschwenken des Sicherheitshebels (36) um eine strukturfeste Schwenkachse (38) aus der Schwenkbahn der Riegelnase (30), so daß die Sperrklinke (12) gegen die Wirkung der Feder (26) in eine Freigabestellung verschwenkbar ist, in der sie den Schuh des Flugkörpers freigibt,
**dadurch gekennzeichnet, daß**
(f) der Sicherheitshebel (36) einen Mechanismus (46,48,50, 54,56,58) aufweist durch welchen bei Einleiten einer Schwenkbewegung des Sicherheitshebels zunächst der Abstandes zwischen Anlagefläche (47) und Schwenkachse (38) verringerbar ist, so daß die Anlagefläche (47) sich bei der Schwenkbewegung von der Riegelnase (30) entfernt, bevor der Sicherheitshebel dann im weiteren Verlauf der Schwenkbewegung relativ zu der Riegelnase in die Freigabestellung bewegt wird.

2. Verriegelungs-Baugruppe nach Anspruch 1, **dadurch gekennzeichnet, daß**
(a) der Sicherheitshebel (36) von einem ersten, der Riegelnase (30) benachbarten und die Anlagefläche (47) bildenden Lenker (48) und einem zweiten, der Riegelnase (30) abgewandten, um die Schwenkachse (38) schwenkbar gelagerten Lenker (46) gebildet ist, die durch ein Gelenk (50) verbunden sind,
(b) der Sicherheitshebel (36) in einer Betriebsstellung an einem strukturfesten Anschlag (54) anliegt, der ein Durchknicken des zweiteiligen Sicherheitshebels (36) unter dem Einfluß von Längskräften in einer ersten Richtung verhindert, so daß der Sicherheitshebel (36) wie eine starre Struktur wirkt,
(c) die Knickbewegung der Lenker (46,48) gegeneinander in einer zweiten Richtung durch Anschlagmittel (56,58) auf einen endlichen Winkel begrenzt ist und
(d) die Stellmotormittel (42,44,40) zum Herausschwenken des Sicherheitshebels (36) an dem zweiten Lenker (48) angreifen.

## Claims

1. Locking unit for a launcher for a missile, comprising
(a) a pivotably mounted detent pawl (12) which is provided with two detent projections (22,24) for gripping over a shoe provided at the missile,
(b) a spring (26) which bias the detent pawl (12) in the direction of a locking position, in which the shoe of the missile is held by the catch projections (22,24), and
(c) a locking projection (30) arranged on the detent pawl (12),
(d) a safety lever (36) having a stop face (47) which is engaged by the locking projection (30) in the locking position when inertial forces of the missile act on the detent pawl (12), such that the detent pawl (12) is held in the locking position, in which the shoe of the missile is gripped over by the detent projections (22,24), and
(e) servomotor means (42,44,40) acting on the safety lever for pivoting the safety lever (36) about a structure-fixed pivot axis (38) out of the pivot path of the locking projection (30) to pivot the detent pawl (12) against the action of the spring (26) into a release position, in which it releases the shoe of the missile,
**characterized in that**
(f) the safety lever (36) has a mechanism (46,48,50,54,56,58) adapted to first reduce the distance between the stop face (47) and the pivot axis (38) when the safely lever starts to pivot, such that the stop face (47) removes from the locking projection (30) during the pivot movement, before the safety lever subsequently during the further course of the pivot movement relative to the locking projection is moved into the release position.

2. Locking unit as set forth in claim 1, **characterized in that**
(a) the safety lever (36) is formed by a first link (48) adjacent to the locking projection (30) and forming the stop face (47) and by a second link (46) remote from the locking projection (30) and mounted pivotably about the pivot axis (38), the two links (48,46) being interconnected by a joint (50),
(b) the safety lever (36), in an operating position, engages a structure-fixed stop (54) which prevents the two-piece safety lever (36) from being deflected in a first direction under the action of longitudinal forces, such that the safety lever (36) acts as a rigid structure,
(c) the mutual deflection movement of the links (46,48) in a second direction is limited by stop means (56,58) to a limited angle, and
(d) the servomotor means (42,44,46) for pivoting out the safety lever (36) act on the second link (48).

## Revendications

1. Bloc de verrouillage pour un dispositif de lancement pour missiles, comprenant
(a) un loquet d'arrêt (12) logé de façon susceptible de pivoter pourvu de deux taquets d'arrêt (22,24) destinés à mordre sur un talon prévu sur le missile,
(b) un ressort (26) qui exerce une charge d'étalonnage sur le loquet d'arrêt (12) en direction d'une position d'arrêt dans laquelle le talon du missile est maintenu par les taquets d'arrêt (22,24), et
(c) un taquet de verrouillage (30) disposé sur le loquet d'arrêt (12),
(d) un levier de sécurité (36) muni d'une surface d'appui (47) contre laquelle vient s'appuyer le taquet de verrouillage (30) en position d'arrêt lorsque des forces d'inertie du missile agissent sur le loquet d'arrêt (12) de telle façon que le loquet d'arrêt (12) est maintenu en position d'arrêt dans laquelle les taquets d'arrêt (22,24) viennent mordre sur le talon du missile, et
(e) des moyens servomoteurs (42,44,40) mordant sur le levier de sécurité et destinés à faire pivoter le levier de sécurité (36) autour d'un axe de pivotement (38) fixe par rapport à la structure hors de la trajectoire de pivotement du taquet de verrouillage (30) de telle façon que le loquet d'arrêt (12) est susceptible d'être pivoté contre l'action du ressort (26) dans une position de dégagement dans laquelle il dégage le talon du missile,
**caractérisé par le fait que**
(f) le levier de sécurité (36) présente un mécanisme (46,48,50, 54,56,58) grâce auquel l'écart entre la surface d'appui (47) et l'axe de pivotement (38) est susceptible d'être d'abord réduit en amorçant un pivotement du levier de sécurité de telle façon que, lors du pivotement, la surface d'appui (47) s'éloigne du taquet de verrouillage (30) avant que le levier de sécurité se déplace ensuite en position de dégagement lorsqu'il continue de pivoter par rapport au taquet de verrouillage.

2. Bloc de verrouillage selon la revendication 1,
**caractérisé par le fait que**
(a) le levier de sécurité (36) est formé par une première bielle (48) adjacente au taquet de verrouillage (30) et formant la surface d'appui (47) et par une seconde bielle (46) opposée au taquet de verrouillage (30) et logée de façon susceptible de pivoter autour de l'axe de pivotement (38), bielles étant reliées par une articulation (50),
(b) le levier de sécurité (36) s'appuie en position de marche contre une butée (54) fixe par rapport à la structure qui empêche le levier de sécurité (36) en deux parties de se plier sous l'effet de forces longitudinales dans une première direction de telle façon que le levier de sécurité (36) agit comme une structure rigide,
(c) des moyens de butée (56,58) limitent, par rapport à un angle fini, le pliage des bielles (46,48) l'une par rapport à l'autre dans une seconde direction et
(d) les moyens servomoteurs (42,44,40) destinés à faire pivoter le levier de sécurité (36) mordent sur la seconde bielle (48).
